# EUROPÄISCHE PATENTSCHRIFT

(11) **EP 3 532 860 B1**
(45) Veröffentlichungstag und Bekanntmachung des Hinweises auf die Patenterteilung: **11.01.2023**
(21) Anmeldenummer: 17804056.4
(22) Anmeldetag: 26.10.2017
(51) Int. Cl.: G01S 5/00, G01S 19/42, G01S 19/48

(54) **VORRICHTUNG UND VERFAHREN ZUM BESTIMMEN EINER GEOGRAPHISCHEN POSITION EINES FAHRZEUGES**
APPARATUS AND METHOD FOR DETERMINING A GEOGRAPHICAL POSITION OF A VEHICLE
DISPOSITIF ET PROCÉDÉ DE GÉOLOCALISATION D'UN VÉHICULE

(30) Priorität: 26.10.2016 DE 102016221027
(43) Veröffentlichungstag der Anmeldung: 04.09.2019
(73) Patentinhaber: Continental Automotive Technologies GmbH, 30165 Hannover (DE)
(72) Erfinder: STÄHLIN, Ulrich, 65760 Eschborn (DE)
(74) Vertreter: Continental Corporation
(86) Internationale Anmeldenummer: PCT/DE2017/200114
(87) Internationale Veröffentlichungsnummer: WO 2018/077358

(56) Entgegenhaltungen:
- WO-A1-01/63316
- WO-A1-2015/189133
- US-A1- 2015 153 178

## Beschreibung

### TECHNISCHES GEBIET

Die vorliegende Erfindung betrifft eine Vorrichtung und ein Verfahren zum Bestimmen einer geographischen Position eines Fahrzeuges, insbesondere zum Bestimmen der geographischen Position des Fahrzeuges anhand von Satellitensignalen.

### TECHNISCHER HINTERGRUND

Um die Sicherheit beim Straßenverkehr zu erhöhen, werden in modernen Fahrzeugen V2X (Vehicle-to-X)-Systeme wie beispielsweise Car2X-Systeme benutzt, die das drahtlose Übertragen von Kommunikationsnachrichten zwischen verschiedenen Verkehrsteilnehmern ermöglichen. Einige dieser Kommunikationsnachrichten (z.B. die Cooperative Awareness Message, CAM) können Informationen über die aktuelle geographische Position, die Fahrtrichtung, die Geschwindigkeit und die Abmessungen des sendenden Fahrzeugs umfassen. Auf Basis dieser Informationen sind Anwendungen möglich, mit denen der Verkehrsfluss optimiert und/oder Fahrer mit Informationen versorgt und ggf. auf gefährliche Situationen aufmerksam gemacht werden können. Insbesondere kann mit einem passenden Empfänger ein globales Satellitennavigationssystem (GNSS) dazu verwendet werden, die aktuelle geographische Position des Fahrzeugs zu bestimmen. Die WO 2015/189133 A1 beschreibt grundsätzlich eine Vorrichtung und ein Verfahren zum Bestimmen einer geographischen Position eines Fahrzeuges, welches ein Fahrzeugkommunikationsgerät zum Aussenden der V2X-Nachricht, umfassend die geographische Position des Fahrzeugs.

Damit ein Satellitennavigationsempfänger eine geographische Position eines Fahrzeugs bestimmen kann, muss er die Signale von mindestens vier Satelliten empfangen. Das Signal eines Satelliten enthält unter anderem Informationen zu seiner Position und seiner lokalen Uhrzeit. Aus der Differenz zwischen der Satellitenzeit und dem Zeitpunkt, an dem das Signal empfangen wurde, berechnet der Satellitennavigationsempfänger seine Distanz zum Satelliten und anhand dieser die geographische Position des Fahrzeugs. Die WO 01/63316 A1 betrifft einen GPS-Empfänger mit einem Aktivmodus und einem Schlafmodus, zwischen denen der GPS-Empfänger auf ein externes Signal hin umschalten kann.

Weiterhin ist es bei einer Lokalisierung eines Fahrzeugs in absoluten Koordinatensystemen bekannt, GNSS-Informationen mit Fahrdynamikdaten zu fusionieren. Dabei kommen unterschiedliche Ansätze zum Tragen, wie beispielsweise der sogenannte Lose-Kopplungs-Ansatz, bei dem aus den GNSS-Daten eine Position berechnet wird (beispielsweise die sogenannte Single Point Position, SPP), die dann mit Fahrdynamikdaten fusioniert wird.

Dieses Verfahren ermöglicht eine Trennung der einzelnen Berechnungsschritte und damit eine einfache Modularisierung; die Berechnung der SPP ist jedoch typischerweise sehr rechenzeitaufwändig.

### BESCHREIBUNG DER ERFINDUNG

Es ist daher die Aufgabe der vorliegenden Erfindung, eine effiziente Vorrichtung und ein effizientes Verfahren zum Bestimmen einer geographischen Position eines Fahrzeuges zur Verfügung zu stellen.

Diese Aufgabe wird durch die Gegenstände der unabhängigen Ansprüche gelöst. Bevorzugte Ausführungsformen der Erfindung sind Gegenstand der abhängigen Ansprüche, der Beschreibung sowie der Figuren.

Gemäß einem ersten Aspekt wird die Aufgabe durch eine Vorrichtung zum Bestimmen einer geographischen Position eines Fahrzeuges gelöst. Die Vorrichtung umfasst einen Satellitennavigationsempfänger, welcher ausgebildet ist, Satellitensignale zu empfangen, einen Sensor, welcher ausgebildet ist, einen Bewegungsparameter des Fahrzeugs zu erfassen, und einen Prozessor, welcher ausgebildet ist, eine V2X-Kommunikationsnachricht zu erzeugen, wobei die V2X-Kommunikationsnachricht den Bewegungsparameter und die geographische Position des Fahrzeugs anzeigt. Der Prozessor ist weiterhin ausgebildet die geographische Position des Fahrzeugs mittels der Satellitensignale ansprechend auf ein Initiieren der Erzeugung der V2X-Kommunikationsnachricht zu bestimmen. Als Initiieren der V2X-Kommunikationsnachricht wird hierbei verstanden, dass gestartet wird, die notwendigen Informationen für die Erzeugung der V2X-Kommunikationsnachricht zu ermitteln. Auf Basis der ermittelten Informationen und der geographischen Position kann die V2X-Kommunikationsnachricht erzeugt werden.

Der Prozessor kann in eine Steuereinheit (Electronic Control Unit, ECU) des Fahrzeugs integriert sein, oder kann als Steuereinheit des Fahrzeugs implementiert sein. Der Prozessor kann ferner einen Mikroprozessor oder eine integrierte Schaltung umfassen, oder als Mikroprozessor oder integrierte Schaltung implementiert sein.

Gemäß einer Ausführungsform der Vorrichtung umfasst die Vorrichtung ferner eine Kommunikationsschnittstelle zum Aussenden der V2X-Kommunikationsnachricht.

Die Kommunikationsschnittstelle kann eine drahtlose V2X-Kommunikationsschnittstelle sein. Die Kommunikationsschnittstelle kann mit zumindest einer Fahrzeugantenne verbunden sein, und kann weiterhin zum Empfangen von V2X-Kommunikationsnachrichten von anderen Fahrzeugen ausgebildet sein. Die Kommunikationsschnittstelle kann mit einem V2X-Kommunikationschip des Fahrzeugs verbunden sein, oder in einen V2X-Kommunikationschip des Fahrzeugs integriert sein.

Der Prozessor kann kommunikationstechnisch mit der Kommunikationsschnittstelle verbunden sein, um die V2X-Kommunikationsnachrichten, welche eine Fahrsituation eines weiteren Fahrzeugs definieren können, zu empfangen. Der Prozessor kann ausgebildet sein, die V2X-Kommunikationsnachrichten auszuwerten, um die Fahrsituation des weiteren Fahrzeugs zu erfassen. Der Prozessor und die Kommunikationsschnittstelle können jeweils mit einem Kommunikationsnetzwerk des Fahrzeugs, insbesondere einem Fahrzeugbus, verbunden sein.

Gemäß einer Ausführungsform der Vorrichtung umfasst die V2X-Kommunikationsnachricht eine CAM-Kommunikationsnachricht und/oder eine DENM-Kommunikationsnachricht und/oder eine BSM-Kommunikationsnachricht und/oder weitere standardisierte V2X-Kommunikationsnachrichten.

Gemäß einer Ausführungsform der Vorrichtung ist der Satellitennavigationsempfänger ein NAVSTAR GPS-, ein GLONASS-, ein GALILEO-, oder ein BEIDOU-Satellitennavigationsempfänger.

Gemäß einer Ausführungsform der Vorrichtung zeigt die V2X-Kommunikationsnachricht ferner die geographische Position des Fahrzeugs an.

Gemäß einer Ausführungsform der Vorrichtung ist der Prozessor ferner ausgebildet, die V2X-Kommunikationsnachricht zu einem ersten Zeitpunkt bereitzustellen, die geographische Position des Fahrzeugs zu einem zweiten Zeitpunkt zu bestimmen, wobei eine Differenz zwischen dem ersten Zeitpunkt und dem zweiten Zeitpunkt kleiner als ein vorbestimmter Wert ist.

Dadurch wird der Vorteil erreicht, dass ein Fehler der bestimmten geographischen Position des Fahrzeugs, die in den V2X-Botschaften angezeigt wird, sehr klein sein kann, ohne zusätzliche Rechenleistung zu benötigen.

Weiterhin dadurch wird der Vorteil erreicht, dass die Erzeugung der V2X-Kommunikationsnachricht und das Bestimmen der geographischen Position des Fahrzeugs synchronisiert werden können. Dies hat den Vorteil, dass das Bestimmen der geographischen Position (z.B. durch die Berechnung einer SPP) des Fahrzeugs genau dann fertig gestellt sein kann, wenn auch eine V2X-Kommunikationsnachricht versendet werden soll. Falls die Differenz zwischen dem ersten Zeitpunkt und dem zweiten Zeitpunkt nicht kleiner als ein vorbestimmter Wert ist, dann kann dies dazu führen, dass die SPP einige Zeit vor dem Versenden einer V2X-Kommunikationsnachricht berechnet wurde und damit unnötig alt sein kann. Beispielsweise handelt es sich bei einer Berechnung der SPP in Rastern mit 10 Hz und mit einem Zeitfehler von maximal 100 ms bei einer Geschwindigkeit des Fahrzeugs von 130 km/h (36 m/s) um einen Fehler der bestimmten geographischen Position von 3,6 m. Auch wenn die Position des Fahrzeugs durch Fahrdynamikdaten häufiger als mit 10 Hz berechnet werden kann, sollte die Berechnung der absoluten geographischen Position des Fahrzeugs auf der Basis von Satellitensignalen erfolgen.

Gemäß einer Ausführungsform wird bei der oben beschriebenen Synchronisierung direkt beim Satellitennavigationsempfänger begonnen. Dieser ermittelt typischerweise auf der Basis der Satellitensignale periodisch Satelliten-Rohdaten (z.B. Pseudorangemessungen oder Trägerphasenmessungen). Diese Satelliten-Rohdaten können dann mit den Aussendezeitpunkten der V2X-Kommunikationsnachrichten synchronisiert werden.

Gemäß einer Ausführungsform der Vorrichtung ist der Satellitennavigationsempfänger ausgebildet, die Satellitensignale mit einer ersten Frequenz vorzuverarbeiten, wobei die erste Frequenz größer als eine zweite Frequenz der Erzeugung der V2X-Kommunikationsnachricht ist.

Dies hat den Vorteil, dass die Rechenlast für die Vorverarbeitung der Satellitensignale im Vergleich zur Berechnung der SPP reduziert werden kann. Weiterhin hat dies den Vorteil, dass dem Prozessor zu einem Zeitpunkt der Bestimmung der SPP möglichst neue vorverarbeitete Satelliten-Rohdaten zur Verfügung stehen.

Gemäß einer Ausführungsform der Vorrichtung beträgt die erste Frequenz 100 Hz oder 1 kHz.

Gemäß einer Ausführungsform der Vorrichtung ist der Prozessor ferner ausgebildet, die geographische Position des Fahrzeugs auf der Basis von Pseudorangemessungen oder Trägerphasenmessungen oder einer Kombination davon zu bestimmen.

Gemäß einer Ausführungsform der Vorrichtung ist der Prozessor ferner ausgebildet, eine Geschwindigkeit des Fahrzeugs auf der Basis der Satellitensignale zu bestimmen.

Gemäß einer Ausführungsform der Vorrichtung ist der Satellitennavigationsempfänger mittels eines Software Defined Radio (SDR)-Empfängers implementiert.

Dadurch wird der Vorteil erreicht, dass der Satellitennavigationsempfänger effizient mit Hilfe einer Software eingestellt werden kann.

Gemäß einem zweiten Aspekt wird die Aufgabe durch ein Verfahren zum Bestimmen einer geographischen Position eines Fahrzeuges gelöst. Das Verfahren umfasst die folgenden Schritte: Empfangen von Satellitensignalen, Erfassen eines Bewegungsparameters des Fahrzeugs, Erzeugen einer V2X-Kommunikationsnachricht, wobei die V2X-Kommunikationsnachricht den Bewegungsparameter des Fahrzeugs anzeigt, und Bestimmen der geographischen Position des Fahrzeugs mittels der Satellitensignale ansprechend auf ein Initiieren der Erzeugung der V2X-Kommunikationsnachricht.

Die V2X-Kommunikationsnachricht zeigt dabei die bestimmte geographische Position des Fahrzeugs an.

Das Verfahren kann durch die Vorrichtung ausgeführt werden. Weitere Merkmale des Verfahrens resultieren unmittelbar aus der Funktionalität und/oder den Merkmalen der Vorrichtung.

Gemäß einem dritten Aspekt wird die Aufgabe durch ein Computerprogramm mit einem Programmcode zum Ausführen des Verfahrens nach dem zweiten Aspekt gelöst, wenn der Programmcode auf einem Computer ausgeführt wird.

Die Vorrichtung kann in Autos, in Flugzeugen oder in Schiffen angebracht werden.

### BESCHREIBUNG DER FIGUREN

Weitere Ausführungsbeispiele werden bezugnehmend auf die beiliegenden Figuren näher erläutert:
Fig. 1 zeigt eine schematische Darstellung einer Vorrichtung zum Bestimmen einer geographischen Position eines Fahrzeuges gemäß einer Ausführungsform;
Fig. 2 zeigt eine schematische Darstellung einer Anordnung mit einer Vorrichtung zum Bestimmen einer geographischen Position eines Fahrzeuges gemäß einer Ausführungsform; und
Fig. 3 zeigt eine schematische Darstellung eines Verfahrens zum Bestimmen einer geographischen Position eines Fahrzeuges gemäß einer Ausführungsform.

### DETAILLIERTE BESCHREIBUNG DER FIGUREN

In der folgenden ausführlichen Beschreibung wird auf die beiliegenden Zeichnungen Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne von dem Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

Die Aspekte und Ausführungsformen werden unter Bezugnahme auf die Zeichnungen beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der Erfindung zu vermitteln. Für einen Fachmann kann es jedoch offensichtlich sein, dass ein oder mehrere Aspekte oder Ausführungsformen mit einem geringeren Grad der spezifischen Details ausgeführt werden können. In anderen Fällen werden bekannte Strukturen und Elemente in schematischer Form dargestellt, um das Beschreiben von einem oder mehreren Aspekten oder Ausführungsformen zu erleichtern. Es versteht sich, dass andere Ausführungsformen genutzt und strukturelle oder logische Änderungen vorgenommen werden können, ohne von dem Konzept der vorliegenden Erfindung abzuweichen.

Wenngleich ein bestimmtes Merkmal oder ein bestimmter Aspekt einer Ausführungsform bezüglich nur einer von mehreren Implementierungen offenbart worden sein mag, kann außerdem ein derartiges Merkmal oder ein derartiger Aspekt mit einem oder mehreren anderen Merkmalen oder Aspekten der anderen Implementierungen kombiniert werden, wie für eine gegebene oder bestimmte Anwendung erwünscht und vorteilhaft sein kann. Weiterhin sollen in dem Ausmaß, in dem die Ausdrücke "enthalten", "haben", "mit" oder andere Varianten davon entweder in der ausführlichen Beschreibung oder den Ansprüchen verwendet werden, solche Ausdrücke auf eine Weise ähnlich dem Ausdruck "umfassen" einschließend sein. Die Ausdrücke "gekoppelt" und "verbunden" können zusammen mit Ableitungen davon verwendet worden sein. Es versteht sich, dass derartige Ausdrücke dazu verwendet werden, um anzugeben, dass zwei Elemente unabhängig davon miteinander kooperieren oder interagieren, ob sie in direktem physischem oder elektrischem Kontakt stehen oder nicht in direktem Kontakt miteinander stehen. Außerdem ist der Ausdruck "beispielhaft" lediglich als ein Beispiel aufzufassen anstatt der Bezeichnung für das Beste oder Optimale. Die folgende Beschreibung ist deshalb nicht in einem einschränkenden Sinne zu verstehen.

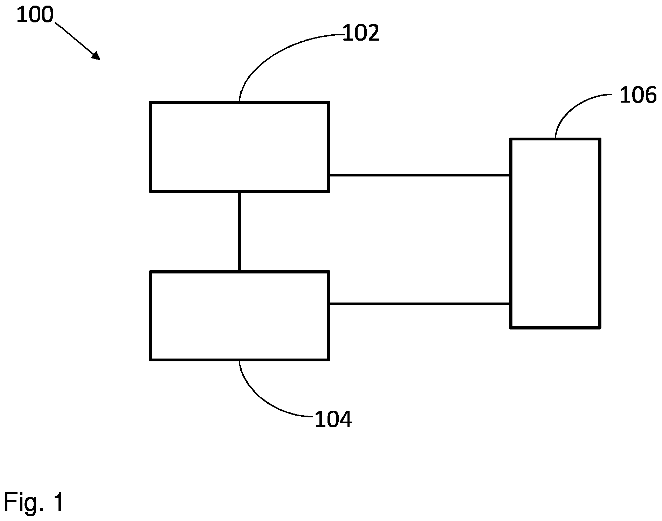

Fig. 1 zeigt eine schematische Darstellung einer Vorrichtung 100 zum Bestimmen einer geographischen Position eines Fahrzeuges 208 gemäß einer Ausführungsform. Die Vorrichtung 100 umfasst einen Satellitennavigationsempfänger 102, welcher ausgebildet ist, Satellitensignale zu empfangen, einen Sensor 104, welcher ausgebildet ist, einen Bewegungsparameter des Fahrzeugs 208 zu erfassen, und einen Prozessor 106, welcher ausgebildet ist, eine V2X-Kommunikationsnachricht zu erzeugen, wobei die V2X-Kommunikationsnachricht den Bewegungsparameter des Fahrzeugs 208 anzeigt, und die geographische Position des Fahrzeugs 208 mittels der Satellitensignale ansprechend auf ein Initiieren der Erzeugung der V2X-Kommunikationsnachricht zu bestimmen.

Anstelle die geographische Position des Fahrzeugs in festen Rastern zu bestimmen (beispielsweise mit 10Hz), kann diese vorteilhaft bestimmt werden, falls eine V2X-Kommunikationsnachricht versendet werden soll, wobei vor allem für die Kommunikationsnachrichten CAM (Cooperative Awareness Message) und DENM (Decentralized Environmental Notification Message) und BSM (Basic Safety Message) das Bestimmen der geographischen Position des Fahrzeugs sehr wichtig ist. Dies ist weiterhin von Vorteil, wenn beispielsweise durch eine Stausteuerung die Frequenz reduziert wird, mit der V2X-Kommunikationsnachrichten versendet werden. Eine höhere Dichte an V2X-Kommunikationsnachrichten bedeutet auch mehr Aufwand für die darauf aufbauenden Anwendungen (oder Apps). Daher ist es vorteilhaft, wenn zu diesen Zeitpunkten mehr Rechenzeit für die Apps zur Verfügung steht und weniger Rechenzeit in die Berechnung oder Bestimmung der geographischen Position des Fahrzeugs fließt.

Dadurch wird weiterhin der technische Vorteil erreicht, dass durch die beschriebene Vorrichtung das Bestimmen der geographischen Position des Fahrzeugs (beispielsweise mittels einer Single-Point-Position (SPP) Berechnung und gegebenenfalls darauf aufbauenden Loosly-Coupled-Fusions-Ansatzes) und die Erzeugung der V2X-Kommunikationsnachricht gekoppelt werden können. Dies hat den Vorteil, dass eine einfache Lastverteilung erreicht werden kann, da beide Rechenoperationen (Bestimmen der SPP und die Erzeugung der V2X-Kommunikationsnachricht) auf einem Prozessor oder Mikrocontroller stattfinden können.

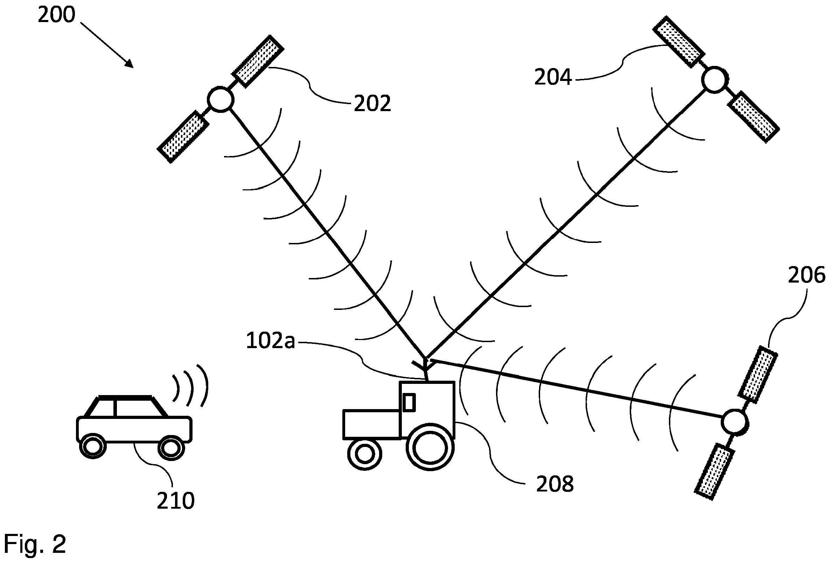

Fig. 2 zeigt eine schematische Darstellung einer Anordnung 200 mit einer Vorrichtung 100 zum Bestimmen einer geographischen Position eines Fahrzeuges 208 gemäß einer Ausführungsform. Gemäß einer Ausführungsform umfasst die Vorrichtung 100 einen Satellitennavigationsempfänger 102, welcher ausgebildet ist, Satellitensignale von den Satelliten 202, 204 und 206 mittels einer Antenne 102a zu empfangen.

Gemäß einer Ausführungsform umfasst die Vorrichtung 100 einen Sensor 104, welcher ausgebildet ist, einen Bewegungsparameter des Fahrzeugs 208 zu erfassen, und einen Prozessor 106, welcher ausgebildet ist, eine V2X-Kommunikationsnachricht des Fahrzeugs 208 zu erzeugen, und die geographische Position des Fahrzeugs 208 mittels der Satellitensignale ansprechend auf ein Initiieren der Erzeugung der V2X-Kommunikationsnachricht zu bestimmen. Weiterhin kann die Vorrichtung 100 eine V2X-Kommunikationsschnittstelle zum Aussenden und/oder Empfangen von V2X-Kommunikationsnachrichten umfassen. Die V2X-Kommunikationsschnittstelle kann ausgebildet sein, V2X-Kommunikationsnachrichten von einem weiteren Fahrzeug 210 zu empfangen. Ansprechen auf den Empfang der V2X-Kommunikationsnachrichten von dem weiteren Fahrzeug 210 und/oder spezifische Bewegungsparameter des Fahrzeugs 208 und/oder zyklische Auslösezeitpunkte kann der Prozessor V2X-Kommunikationsnachrichten des Fahrzeugs 208 erzeugen. Ferner können die V2X-Kommunikationsnachrichten des Fahrzeugs 208 und die geographische Position des Fahrzeugs 208 durch die V2X-Kommunikationsschnittstelle des Fahrzeugs 208 ausgesendet werden.

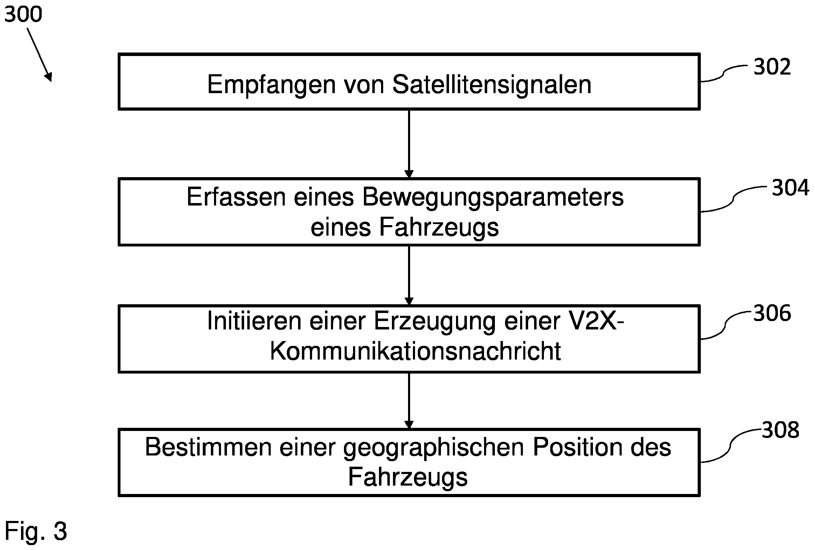

Fig. 3 zeigt eine schematische Darstellung eines Verfahrens 300 zum Bestimmen einer geographischen Position eines Fahrzeuges 208 gemäß einer Ausführungsform. Das Verfahren 300 umfasst die folgenden Schritte: Empfangen 302 von Satellitensignalen, Erfassen 304 eines Bewegungsparameters des Fahrzeugs 208, Erzeugen einer V2X-Kommunikationsnachricht, insbesondere Initiieren 306 der Erzeugung einer V2X-Kommunikationsnachricht, wobei die V2X-Kommunikationsnachricht den Bewegungsparameter des Fahrzeugs 208 anzeigt, und Bestimmen 308 der geographischen Position des Fahrzeugs 208 mittels der Satellitensignale ansprechend auf das Initiieren 306 der Erzeugung der V2X-Kommunikationsnachricht.

Gemäß einer Ausführungsform des Verfahrens zeigt die V2X-Kommunikationsnachricht die bestimmte geographische Position des Fahrzeugs an.

### BEZUGSZEICHENLISTE

- 100: Vorrichtung
- 102: Satellitennavigationsempfänger
- 102a: Antenne
- 104: Sensor
- 106: Prozessor

- 200: Anordnung
- 202: Satellit
- 204: Satellit
- 206: Satellit
- 208: Fahrzeug
- 210: Fahrzeug

- 300: Verfahren
- 302: Empfangen
- 304: Erfassen
- 306: Initiieren
- 308: Bestimmen

## Patentansprüche

1. Vorrichtung (100) zum Bestimmen einer geographischen Position eines Fahrzeuges (208), mit:
einem Satellitennavigationsempfänger (102), welcher ausgebildet ist, Satellitensignale zu empfangen;
einem Sensor (104), welcher ausgebildet ist, einen Bewegungsparameter des Fahrzeugs (208) zu erfassen; und
einem Prozessor (106), welcher ausgebildet ist, eine V2X-Kommunikationsnachricht zu erzeugen und auszusenden, wobei die V2X-Kommunikationsnachricht den Bewegungsparameter und die geographische Position des Fahrzeugs (208) anzeigt, **dadurch gekennzeichnet, dass** der Prozessor (106) weiterhin ausgebildet ist die geographische Position des Fahrzeugs (208) mittels der Satellitensignale ansprechend auf ein Initiieren der Erzeugung der V2X-Kommunikationsnachricht zu bestimmen.

2. Vorrichtung (100) nach Anspruch 1, wobei die Vorrichtung (100) ferner eine Kommunikationsschnittstelle zum Aussenden der V2X-Kommunikationsnachricht umfasst.

3. Vorrichtung (100) nach Anspruch 1 oder 2, wobei die V2X-Kommunikationsnachricht eine CAM-Kommunikationsnachricht und/oder eine DENM-Kommunikationsnachricht und/oder eine BSM-Kommunikationsnachricht umfasst.

4. Vorrichtung (100) nach einem der vorstehenden Ansprüche, wobei der Satellitennavigationsempfänger (102) ein NAVSTAR GPS-, ein GLONASS-, ein GALILEO-, oder ein BEIDOU-Satellitennavigationsempfänger ist.

5. Vorrichtung (100) nach einem der vorstehenden Ansprüche, wobei der Prozessor (106) ferner ausgebildet ist, die V2X-Kommunikationsnachricht zu einem ersten Zeitpunkt bereitzustellen, und die geographische Position des Fahrzeugs (208) zu einem zweiten Zeitpunkt zu bestimmen, wobei eine Differenz zwischen dem ersten Zeitpunkt und dem zweiten Zeitpunkt kleiner als ein vorbestimmter Wert ist.

6. Vorrichtung (100) nach einem der vorstehenden Ansprüche, wobei der Satellitennavigationsempfänger (102) ausgebildet ist, die Satellitensignale mit einer ersten Frequenz vorzuverarbeiten, wobei die erste Frequenz größer als eine zweite Frequenz der Erzeugung der V2X-Kommunikationsnachricht ist.

7. Vorrichtung (100) nach Anspruch 6, wobei die erste Frequenz 100 Hz oder 1 kHz beträgt.

8. Vorrichtung (100) nach einem der vorstehenden Ansprüche, wobei der Prozessor (106) ferner ausgebildet ist, die geographische Position des Fahrzeugs (208) auf der Basis von Pseudorangemessungen oder Trägerphasenmessungen oder einer Kombination davon zu bestimmen.

9. Vorrichtung (100) nach einem der vorstehenden Ansprüche, wobei der Prozessor (106) ferner ausgebildet ist, eine Geschwindigkeit des Fahrzeugs (208) auf der Basis der Satellitensignale zu bestimmen.

10. Vorrichtung (100) nach einem der vorstehenden Ansprüche, wobei der Satellitennavigationsempfänger (102) und der Prozessor (106) mittels eines SDR-Empfängers implementiert sind.

11. Verfahren (300) zum Bestimmen einer geographischen Position eines Fahrzeuges (208), mit:
Empfangen (302) von Satellitensignalen;
Erfassen (304) eines Bewegungsparameters des Fahrzeugs (208);
Erzeugen und Aussenden einer V2X-Kommunikationsnachricht, wobei die V2X-Kommunikationsnachricht den Bewegungsparameter und die geographische Position des Fahrzeugs (208) anzeigt; **gekennzeichnet durch**,
Bestimmen (308) der geographischen Position des Fahrzeugs (208) mittels der Satellitensignale ansprechend auf ein Initiieren (306) der Erzeugung der V2X-Kommunikationsnachricht.

12. Computerprogramm mit einem Programmcode zum Ausführen des Verfahrens (300) nach Anspruch 11, wenn der Programmcode auf einem Computer ausgeführt wird.

## Claims

1. Apparatus (100) for determining a geographical position of a vehicle (208), having:
a satellite navigation receiver (102) designed to receive satellite signals;
a sensor (104) designed to capture a motion parameter of the vehicle (208); and
a processor (106) designed to generate and transmit a V2X communication message,
wherein the V2X communication message indicates the motion parameter and the geographical position of the vehicle (208), **characterized in that** the processor (106) is furthermore designed to determine the geographical position of the vehicle (208) by means of the satellite signals in response to an initiating of the generation of the V2X communication message.

2. Apparatus (100) according to Claim 1, wherein the apparatus (100) further comprises a communication interface for transmitting the V2X communication message.

3. Apparatus (100) according to Claim 1 or 2, wherein the V2X communication message comprises a CAM communication message and/or a DENM communication message and/or a BSM communication message.

4. Apparatus (100) according to one of the preceding claims, wherein the satellite navigation receiver (102) is a NAVSTAR GPS, a GLONASS, a GALILEO or a BEIDOU satellite navigation receiver.

5. Apparatus (100) according to one of the preceding claims, wherein the processor (106) is further designed to provide the V2X communication message at a first time, and to determine the geographical position of the vehicle (208) at a second time, wherein a difference between the first time and the second time is smaller than a predetermined value.

6. Apparatus (100) according to one of the preceding claims, wherein the satellite navigation receiver (102) is designed to preprocess the satellite signals at a first frequency, wherein the first frequency is higher than a second frequency of the generation of the V2X communication message.

7. Apparatus (100) according to Claim 6, wherein the first frequency is 100 Hz or 1 kHz.

8. Apparatus (100) according to one of the preceding claims, wherein the processor (106) is further designed to determine the geographical position of the vehicle (208) on the basis of pseudo-range measurements or carrier phase measurements or a combination of these.

9. Apparatus (100) according to one of the preceding claims, wherein the processor (106) is further designed to determine a speed of the vehicle (208) on the basis of the satellite signals.

10. Apparatus (100) according to one of the preceding claims, wherein the satellite navigation receiver (102) and the processor (106) are implemented by means of an SDR receiver.

11. Method (300) for determining a geographical position of a vehicle (208), involving:
receiving (302) satellite signals;
capturing (304) a motion parameter of the vehicle (208);
generating and transmitting a V2X communication message, wherein the V2X communication message indicates the motion parameter and the geographical position of the vehicle (208);
**characterized by**
determining (308) the geographical position of the vehicle (208) by means of the satellite signals in response to an initiating (306) of the generation of the V2X communication message.

12. Computer program having a program code for performing the method (300) according to Claim 11 when the program code is executed on a computer.

## Revendications

1. Dispositif (100) permettant de déterminer une position géographique d'un véhicule (208), comprenant :
un récepteur de navigation par satellite (102) qui est réalisé pour recevoir des signaux de satellite ;
un capteur (104) qui est réalisé pour détecter un paramètre de mouvement du véhicule (208) ; et
un processeur (106) qui est réalisé pour générer et émettre un message de communication V2X, le message de communication V2X indiquant le paramètre de mouvement et la position géographique du véhicule (208),
**caractérisé en ce que** le processeur (106) est en outre réalisé pour déterminer la position géographique du véhicule (208) au moyen des signaux de satellite en réponse à un lancement de la génération du message de communication V2X.

2. Dispositif (100) selon la revendication 1, dans lequel le dispositif (100) comprend en outre une interface de communication pour émettre le message de communication V2X.

3. Dispositif (100) selon la revendication 1 ou 2, dans lequel le message de communication V2X comprend un message de communication CAM et/ou un message de communication DENM et/ou un message de communication BSM.

4. Dispositif (100) selon l'une quelconque des revendications précédentes, dans lequel le récepteur de navigation par satellite (102) est un récepteur de navigation par satellite de type NAVSTAR GPS, GLONASS, GALILEO ou BEIDOU.

5. Dispositif (100) selon l'une quelconque des revendications précédentes, dans lequel le processeur (106) est en outre réalisé pour fournir le message de communication V2X à un premier instant, et pour déterminer la position géographique du véhicule (208) à un deuxième instant, une différence entre le premier instant et le deuxième instant étant inférieure à une valeur prédéterminée.

6. Dispositif (100) selon l'une quelconque des revendications précédentes, dans lequel le récepteur de navigation par satellite (102) est réalisé pour prétraiter les signaux de satellite à une première fréquence, la première fréquence étant supérieure à une deuxième fréquence de la génération du message de communication V2X.

7. Dispositif (100) selon la revendication 6, dans lequel la première fréquence est égale à 100 Hz ou 1 kHz.

8. Dispositif (100) selon l'une quelconque des revendications précédentes, dans lequel le processeur (106) est en outre réalisé pour déterminer la position géographique du véhicule (208) sur la base de mesures de pseudodistance ou de mesures de phase porteuse ou d'une combinaison de celles-ci.

9. Dispositif (100) selon l'une quelconque des revendications précédentes, dans lequel le processeur (106) est en outre réalisé pour déterminer une vitesse du véhicule (208) sur la base des signaux de satellite.

10. Dispositif (100) selon l'une quelconque des revendications précédentes, dans lequel le récepteur de navigation par satellite (102) et le processeur (106) sont mis en œuvre au moyen d'un récepteur SDR.

11. Procédé (300) permettant de déterminer une position géographique d'un véhicule (208), comprenant les étapes consistant à :
recevoir (302) des signaux de satellite ;
détecter (304) un paramètre de mouvement du véhicule (208) ;
générer et émettre un message de communication V2X, le message de communication V2X indiquant le paramètre de mouvement et la position géographique du véhicule (208) ;
**caractérisé par**
la détermination (308) de la position géographique du véhicule (208) au moyen des signaux de satellite en réponse à un lancement (306) de la génération du message de communication V2X.

12. Programme informatique comprenant du code programme pour exécuter le procédé (300) selon la revendication 11 lorsque le code programme est exécuté sur un ordinateur.
